Europäisches Patentamt

European Patent Office

Office européen des brevets

(11) Veröffentlichungsnummer: **0 572 696 A1**

# EUROPÄISCHE PATENTANMELDUNG

(21) Anmeldenummer: **92109368.8**

(22) Anmeldetag: **03.06.92**

(51) Int. Cl.5: **G06F 12/02**, G06F 9/445

(43) Veröffentlichungstag der Anmeldung:
**08.12.93 Patentblatt 93/49**

(84) Benannte Vertragsstaaten:
**DE FR GB**

(71) Anmelder: **International Business Machines Corporation**
**Old Orchard Road**
**Armonk, N.Y. 10504(US)**

(72) Erfinder: **Holder, Karl-Hans**
**Hermann-Kurz-Strasse 15**
**W-7032 Sindelfingen 6(DE)**

Erfinder: **Salm, Ingolf**
**Rötestrasse 30/1**
**W-7046 Gäufelden 1(DE)**
Erfinder: **Zimmermann, Monika**
**Hohenstaufenstrasse 16**
**W-7030 Böblingen(DE)**

(74) Vertreter: **Mönig, Anton, Dipl.-Ing.**
**IBM Deutschland Informationssysteme GmbH,**
**Patentwesen und Urheberrecht**
**D-70548 Stuttgart (DE)**

(54) Speicherplatzverwaltung für eine Vielzahl von Speicherplatzanforderungen in einem Arbeitsspeicher eines Computers.

(57) Speicherplatzverwaltung für eine Vielzahl von Speicherplatzanforderungen in einem Computer-Arbeitsspeicher mit einer P- und einer N-Bit Speicheradressierung (N > P). Speicherplatzbereiche mit P-Bit-Adressierung werden in Richtung steigender Adressen in einem unteren Teilbereich (2-1) des Speichers verwaltet; Speicherplatzbereiche mit N-Bit-Adressierung werden in Richtung fallender Adressen im Gesamtbereich des Speichers (2) verwaltet.

FIG. 2

Üblicherweise werden bei Rechnern (die in Time-Sharing, Multi-Processing, oder Batch-Mode betrieben werden) die auszuführenden Programme in den Arbeitsspeicher geladen und verwaltet. Die Programme, inklusive des Betriebssystems, stellen nicht vorhersehbar dynamische Speicherplatzanforderungen an den Arbeitsspeicher, um dort andere Programme nachzuladen bzw. Daten abzulegen. Ein von einem Programm nicht mehr benötigter Speicherplatz wird wieder für die Speicherplatzverwaltung freigegeben. Freigewordene Speicherplatzbereiche werden als "Lücken" angesehen, welche für neue Speicherplatzanforderungen wieder genutzt werden können. Der Speicherplatzverwaltung unterliegt die Zuteilung der Speicherplatzbereiche und die Verwaltung der entstandenen "Lücken".

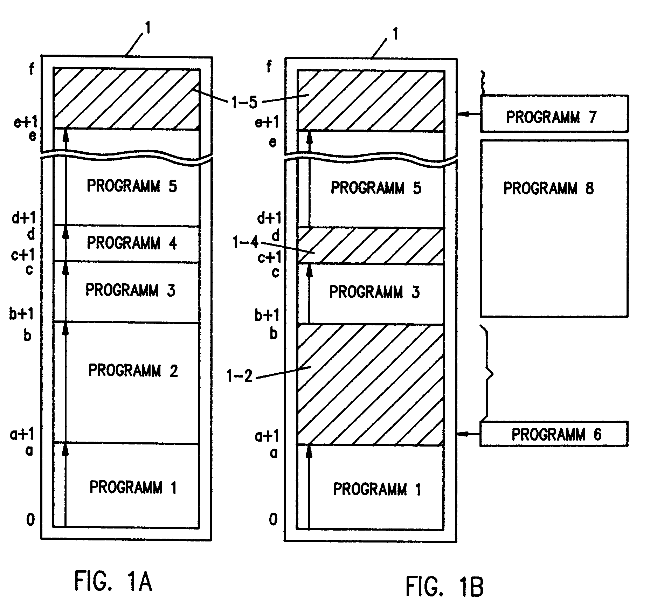

Ein vereinfachtes Beispiel (Fig. 1A, B) soll dies verdeutlichen. In diesem Beispiel werden Speicherplatzbereiche reserviert, um Programme zu laden. Sobald Speicherplatzbereiche für Programme nicht mehr benötigt werden, werden diese für eine anderweitige Belegung freigegeben. Es sei ausdrücklich betont, daß Speicherplatzbereiche nicht nur für Programme (wie im genannten Beispiel), sondern auch für Daten benutzt werden können.

Ein als erstes zu ladendes Programm 1 gelangt gemäß Fig. 1A in den unteren Adressbereich des Speichers (Adresse 0 bis a), ein danach zu ladendes zweites Programm 2 in den daran anschließenden Adressbereich (Adresse a + 1 bis b) usw..

Auf diese Weise werden in Fig. 1A den Programmen 1 bis 5 im Speicher 1 mit dem verfügbaren Speicherbereich (Adresse 0 bis f) folgende Adressbereiche zugeordnet:

|  | Adreßbereich |
|---|---|
| Programm 1 | 0 bis a |
| Programm 2 | a + 1 bis b |
| Programm 3 | b + 1 bis c |
| Programm 4 | c + 1 bis d |
| Programm 5 | d + 1 bis e |
| unbesetzt | e + 1 bis f. |

Der von einem Programm (z.B. 2 und 4) belegte Speicherplatz wird nach dessen Ausführung an die Speicherverwaltung zur weiteren Verwendung zurückgegeben. Die für diese Programme freiwerdenden Adreßbereiche a + 1 bis b und c + 1 bis d stehen mit dem bisher unbesetzt gebliebenen Bereich e + 1 bis f zur Aufnahme neuer Programme zur Verfügung (Fig. 1B).

In die frei werdenden "Lücken" (a + 1 bis b, c + 1 bis d) und in den bisher nicht besetzten Bereich e + 1 bis f können neue Programme geladen werden. Eine solche Lücke kann nur ein Programm aufnehmen, dessen Speicherplatzbedarf nicht den Speicherplatzbereich der "Lücke" überschreitet.

Im Beispiel von Fig. 1B ist das Programm 8 nicht unterzubringen, da jede der Lücken a + 1 bis b, c + 1 bis d oder e + 1 bis f kleiner als der für das Programm 8 erforderliche Speicherplatzbereich ist. Hingegen lassen sich die anderen Programme 6 und 7 in den freien (schräg schraffierten) Speicherraum aufnehmen: z. B. Programm 6 in den Bereich a + 1 bis b, Programm 7 in den Bereich e + 1 bis f. Da Programm 6 (7) nicht den ganzen Adressraum a + 1 bis b (e + 1 bis f) ausfüllen kann, verbleibt auch hier eine unbesetzte, jeweils mit geschweifter Klammer gekennzeichnete Speicherlücke.

Größere, neu zu ladende Programme, wie z. B. das Programm 8 müssen, um in den Arbeitsspeicher aufgenommen werden zu können, so lange warten, bis sich eine genügend große "Lücke" gebildet hat.

Durch ständiges Laden und Entfernen von Programmen (oder Datenbereichen) ergibt sich eine Vielzahl von stochastisch verteilten "Lücken".

Es gibt verschiedene Strategien, einen Speicher optimal auszunutzen und dabei zu bestimmen, welches Programm in welche Lücke geladen werden soll.

Erfolgt die Zuweisung der Speicherplatzbereiche in Richtung steigender Adressen, was durch die Einfach-Pfeilrichtung in Fig. 1 angedeutet ist und erfolgt ebenso auch die Zuteilung von "Lücken" an neue Programme in Richtung steigender Adressen, so ist die Wahrscheinlichkeit des Auftretens größerer Lücken am oberen Ende des Arbeitsspeichers am höchsten. Dies trifft insbesondere für eine Strategie zu, bei der die erste aufgefundene ausreichend große "Lücke" zur Aufnahme eines Programms gewählt wird.

Bei einigen Betriebssystemen, z.B. IBM VSE/ESA ergaben sich im Laufe der Computerentwicklung Erweiterungen des Arbeitsspeichers. War am Anfang der Entwicklung der Speicher noch mit 24 Bit-Adressen (24 Stellen einer Dualzahl; in jeder Stelle steht eine 0 oder 1) adressierbar, führten spätere Speichererweiterungen zu 31 Bit-Adressen.

Durch diese Speichererweiterungen bedingt, gibt es eine Vielzahl von Anwendern, die "alte" Anwendungsprogramme nutzen, welche nur einer 24 Bit-Adressierung fähig sind und die gleichzeitig "neue" Anwendungsprogramme nutzen, welche einer 31 Bit-Adressierung fähig sind.

Es ist Aufgabe der Erfindung, eine Speicherverwaltung vorzusehen, die in vorteilhafter Weise eine quasi gleichzeitige unterschiedliche Bit-Adressierung bei Speichererweiterungen vorsieht.

Diese Aufgabe wird erfindungsgemäß durch die im kennzeichnenden Teil des Anspruchs 1 angegebenen Merkmale gelöst.

Vorteilhafte Weiterbildungen der Erfindung sind in den Unteransprüchen charakterisiert.

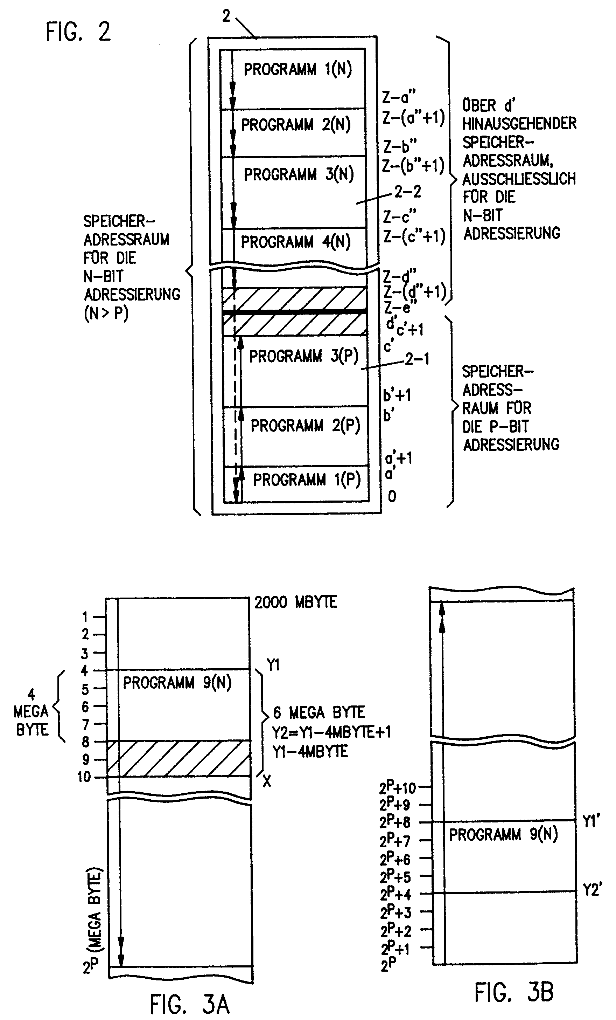

Die Speicheraufteilung erfolgt in Fig. 2 in vorteilhafter Weise derart, daß für die 24 Bit-Programme (P-Bit-Programme) nur der untere Speicherbereich 2-1 (bis zu einer 16 Mbyte Grenze) in Richtung steigender Adressen herangezogen wird, während der gesamte Speicher 2 in Richtung fallender Adressen für die 31 Bit-Programme (N-Bit-Programme) verwendet wird.

Ausführungsbeispiele der Erfindung sind in den Zeichnungen dargestellt und werden im folgenden näher beschrieben. Es zeigen:

Fig. 1A    eine schematische Darstellung von nach dem Stand der Technik in einen Computer-Arbeitsspeicher geladene Programmen;

Fig. 1B    eine schematische Darstellung von einem Arbeitsspeicher gemäß Fig. 1A, mit "Lücken" und neu aufzunehmenden Programmen;

Fig. 2    Beispiel einer schematischen Darstellung der erfindungsgemäßen Speicherplatzverwaltung;

Fig. 3A    eine schematische Darstellung zur Bestimmung der absoluten Adressen durch Abwärtszählen;

Fig. 3B    eine schematische Darstellung zur Bestimmung der absoluten Adressen durch Aufwärtszählen mit nachfolgender Differenzbildung.

In Fig. 2 ist ein Beispiel für die erfindungsgemäße Speicherplatzverwaltung gezeigt.

Der Arbeitsspeicher ist mit "2" gekennzeichnet. Ein Teilbereich 2-1 des Speichers, beispielsweise für den Adressbereich 0 bis $2^P-1$ ($2^P-1$ = 16 MegaByte-1 für P = 24), dient zur Aufnahme von den Programmen
Prog.1 (P), Prog.2 (P), Prog.3 (P) etc.

Diese Programme unterliegen einer P-Bit-Adressierung (z.B. P = 24 Bit). 24-Bit-Adressen ermöglichen eine Adressierung des 16 Megabyte großen Teilbereiches 2-1 des Speichers 2. Im Beispiel gemäß Fig. 2 sind aus Vereinfachungsgründen nur Programme aufgeführt; allgemein bezieht sich die Speicherplatzverwaltung auch auf Datenbereiche.

Das durch die Speicherplatzverwaltung bewirkte Laden und Entfernen von Programmen etc. erfolgt in Richtung aufsteigender Adressen (Einfachpfeilrichtung). Den Programmen sind folgende Speicherbereiche zugeordnet, wobei 0, a', b', c' und d' Speicheradressen darstellen und 0 < a' < b' < c' < d' ist:

|  | Adreßbereich |
|---|---|
| Prog.1 (P) | 0 - a' |
| Prog.2 (P) | a' + 1 - b' |
| Prog.3 (P) | b' + 1 - c' |
| unbesetzt | c' + 1 - d'. |

Außerdem sind Programme
Prog.1 (N)
Prog.2 (N)
Prog.3 (N)
Prog.4 (N)
vorgesehen, welche einer N-Bit-Adressierung (N > P) unterliegen; für den Fall einer N = 31 Bit-Adresse ließe sich z. B. ein Speicher von der Größe 2 Gigabyte adressieren.

Die Speicherplatzverwaltung für diese Programme erfolgt für den Gesamtspeicher 2 und beruht auf einer Adressierung in Richtung fallender Adressen (Doppelpfeilrichtung). Die Einzelpfeiladressrichtung ist der Doppelpfeiladressrichtung entgegengesetzt.

Den Programmen sind folgende Speicherbereiche zugeordnet, wobei z, (z - a''), (z - b''), (z - c''), (z - d'') und (z - e'') absolute Speicheradressen darstellen und z > (z - a'') > (z - b'') > (z - c'') > (z - d'') und (z - e'') ist.

|            | Adreßbereich              |
|------------|---------------------------|
| Prog.1 (N) | (z ) - (z - a'')          |
| Prog.2 (N) | (z - (a'' + 1)) - (z - b'') |
| Prog.3 (N) | (z - (b'' + 1)) - (z - c'') |
| Prog.4 (N) | (z - (c'' + 1)) - (z - d'') |
| unbesetzt  | (z - (d'' + 1)) - (z - e''). |

(Der Programmbeginn liegt bei der niedereren absoluten Speicheradresse, das Programmende bei der höheren).

Der Vorteil dieser Speicherverwaltung mit gegenläufiger Adressierrichtung für die Programme mit P-Bit- und N-Bit-Adressierung liegt darin, daß der Speicher optimaler ausgenutzt werden kann:

1. Dabei konkurrieren die N-Bit-Programme üblicherweise nicht mit den P-Bit-Programmen um den Teilbereich des Speichers 2-1; grundsätzlich kann von den P-Bit-Programmen nur dieser Speicherbereich genutzt werden, während für die N-Bit-Programme der gesamte Speicher 2 zur Verfügung steht. Die N-Bit-Programme nehmen den im Speicher 2 enthaltenen Teilbereich 2-1 nur dann in Anspruch, wenn der Adreßbereich Z-e'' bis Z ausgelastet und der Bereich 2-1 noch Platz zur Aufnahme weiterer N-Bit-Programme bietet.

2. Sich ergebende Lücken im in Fig. 3 schraffiert dargestellten Bereich zwischen den Programmen mit P-Bit- und N-Bit-Adressierung sind meist größer als die Lücken, die innerhalb des Bereiches der Programme mit P-Bit- oder mit N-Bit-Adressierung auftreten. Solche großen "Lücken" gestatten aber, daß neu aufzunehmende, große Programme (mit N-Bit-Adressierung) ohne nachteilige, hohe Wartezeiten in die Speicherverwaltung einbezogen werden können. Als Extremfall können sogar N-Bit-Programme geladen werden, die größer als der Bereich Z-e'' bis Z sind.

Aus Vereinfachungsgründen der Darstellung wurde darauf verzichtet, in Fig. 2 auch die sich in ständigem Betrieb beim Laden und Entfernen ergebenden Lücken zwischen den Programmen darzustellen.

Üblicherweise wird die Adressrechnung bei fallenden Adressen (in Doppelpfeilrichtung) durch Rückwärtszählen (s. Fig. 3A, B) - ausgehend von der höchsten absoluten Speicheradresse z - bewirkt.

Beim Aufsuchen einer Lücke (mit einer Mindestgröße von 4 MegaByte gemäß angenommener Spezifikationsforderung) durch Abwärtszählen sei angenommen, daß eine solche erste Lücke im Adreßbereich x bis $y_1$ gelegen sei. Dem Programm wird ein Speicherplatzbereich von Adresse $y_2$ = $Y_1$-4 MegaByte + 1 bis Adresse $y_1$ zugeteilt. Der Bereich von Adresse x bis Adresse $y_1$-4 MegaByte bleibt als Restlücke für weitere Speicheranforderungen verfügbar.

Eine Bestimmung der absoluten Speicheradressen durch zusätzliches Rückwärtszählen ist jedoch wegen des höheren programmtechnischen und gegebenenfalls hardwaremäßigen Aufwandes nachteilig.

Aus diesem Grunde ist es vorteilhaft, die Bestimmung der Adressen $y_1$ und $y_2$ bei der N-Bit-Adressierung durch Aufwärtszählen ab der Adresse $2^P$ so zu bestimmen, daß das Programm in einen gedachten Speicherbereich $y_2'$ bis $y_1'$ derart zu liegen kommt, daß sich nach Bildung der Differenz

$$y_1 = 2000 - (Y_2' - 2^P)$$
$$y_2 = 2000 - (Y_1' - 2^P)$$

die absoluten Adressen $y_1$ und $y_2$ ergeben. (2000 MByte sei als maximale verfügbare Adresse für eine 31 Bit-Adressierung angenommen; P = 24 Bit).

Mit anderen Worten, bei der Adressbestimmung von $y_1$ und $y_2$ tut man zunächst so, als läge eine Adressierung in Richtung aufsteigende Adressen vor und korrigiert dann diese Hilfsvorstellung durch entsprechende Differenzbildung für die Adressierung in Richtung fallender Adressen.

Weil das Durchsuchen des Arbeitsspeichers auf freie Speicherbereiche nicht in diesen Speicherbereichen selbst erfolgt, sondern in einer die Speicherbereiche repräsentierenden Verwaltungsinformation (Index), kann in vorteilhafter Weise diese Verwaltungsinformation in Richtung steigender Adressen durchsucht werden - die Adressen für einen aufgefundenen Programmplatz werden durch die vorbeschriebene Differenzbildung umgewandelt.

Dadurch ist es möglich, denselben Speicher-Verwaltungsalgorithmus (und somit identischen Programmcode) - wie er üblicherweise nur für die Adreßrechnung in Richtung aufsteigender Adressen verwendet wird - auch für die Adreßrechnung in Richtung fallender Adressen (unter zusätzlicher Beachtung der Differenzbildung) zu benutzen.

**Patentansprüche**

1. Speicherplatzverwaltung für eine Vielzahl von Speicherplatzanforderungen in einem Arbeitsspeicher eines Computers, dadurch gekennzeichnet,

   daß erste Speicherplatzbereiche (Prog.1 (P), Prog.2 (P), Prog.3 (P)) für eine P-Bit- und zweite Speicherplatzbereiche (Prog.1 (N), Prog.2 (N), Prog.3 (N)) für eine N-Bit-Speicheradressierung vorgesehen sind,

   wobei N > P ist und die ersten Speicherplatzbereiche für einen Teilbereich (2-1) des Speichers (2) in Richtung aufsteigender Adressen verwaltet werden und die zweiten Speicherplatzbereiche für den Gesamtspeicher (2) in Richtung fallender Adressen verwaltet werden.

2. Verfahren zur Bestimmung der absoluten Speicheradressen für die Speicherplatzbereiche mit einer Adressierung in Richtung fallender Adressen,

   dadurch gekennzeichnet,

   daß zunächst eine Bestimmung einer gedachten Speicheradresse in Richtung steigender Adressen durchgeführt und die absolute Speicheradresse durch Differenzbildung der obersten Speicheradresse mit der gedachten Speicheradresse gebildet wird unter wahlweiser Berücksichtigung von Spezifikationsparametern.

FIG. 1A

FIG. 1B

FIG. 2

SPEICHER-
ADRESSRAUM
FÜR DIE
N-BIT
ADRESSIERUNG
(N > P)

PROGRAMM 1(N)

PROGRAMM 2(N)

PROGRAMM 3(N)

PROGRAMM 4(N)

$Z-a''$
$Z-(a''+1)$
$Z-b''$
$Z-(b''+1)$

2-2

$Z-c''$
$Z-(c''+1)$
$Z-d''$
$Z-(d''+1)$
$Z-e''$

ÜBER d'
HINAUSGEHENDER
SPEICHER-
ADRESSRAUM,
AUSSCHLIESSLICH
FÜR DIE
N-BIT
ADRESSIERUNG

$d'$
$c'+1$
$c'$

PROGRAMM 3(P)

2-1

$b'+1$
$b'$

PROGRAMM 2(P)

$a'+1$
$a'$
0

PROGRAMM 1(P)

SPEICHER-
ADRESS-
RAUM FÜR
DIE P-BIT
ADRESSIERUNG

FIG. 3A

2000 MBYTE

1
2
3
4

PROGRAMM 9(N)

Y1

4
MEGA
BYTE

5
6
7
8
9
10

6 MEGA BYTE
Y2=Y1−4MBYTE+1
Y1−4MBYTE

X

$2^P$ (MEGA BYTE)

FIG. 3B

$2^P+10$
$2^P+9$
$2^P+8$
$2^P+7$
$2^P+6$
$2^P+5$
$2^P+4$
$2^P+3$
$2^P+2$
$2^P+1$
$2^P$

PROGRAMM 9(N)

Y1'

Y2'

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-3 924 245 (EATON) <br> * Zusammenfassung * <br> * Spalte 4, Zeile 7 - Zeile 38; Abbildung 2 * <br><br> ----- | 1 | G06F12/02 <br> G06F9/445 |
| | | | **RECHERCHIERTE SACHGEBIETE (Int. Cl.5 )** |
| | | | G06F |

Der vorliegende Recherchenbericht wurde für alle Patentansprüche erstellt

| Recherchenort | Abschlußdatum der Recherche | Prüfer |
|---|---|---|
| DEN HAAG | 19 JANUAR 1993 | LEDRUT P. |